# EUROPEAN PATENT SPECIFICATION

(11) **EP 3 041 076 B1**
(45) Date of publication and mention of the grant of the patent: **31.10.2018**
(21) Application number: 15202112.7
(22) Date of filing: 22.12.2015
(51) Int. Cl.: H01M 8/0221, H01M 8/0226, H01M 8/0239, H01M 8/0243, H01M 8/0234, H01M 8/0245

(54) **FUEL CELL SEPARATING PLATE AND METHOD OF MANUFACTURING THE SAME**
BRENNSTOFFZELLENTRENNPLATTE UND VERFAHREN ZUR HERSTELLUNG DAVON
PLAQUE DE SÉPARATION DE PILE À COMBUSTIBLE ET SON PROCÉDÉ DE FABRICATION

(30) Priority: 02.01.2015 KR 20150000100
(43) Date of publication of application: 06.07.2016
(73) Proprietor: Hankook Tire Co., Ltd., Seoul 135-723 (KR)
(72) Inventor: Ihm, Jae Wook, 305-721 Daejeon (KR); Kim, Jeong Heon, 305-768 Daejeon (KR)
(74) Representative: Petraz, Gilberto Luigi

(56) References cited:
- EP-A1- 2 717 369
- EP-A2- 1 280 217
- JP-A- 2009 093 937
- US-A1- 2003 143 452

## Description

### BACKGROUND OF THE INVENTION

### Field of the Invention

The present invention relates to a fuel cell separating plate and a method of manufacturing the same, and more particularly to a fuel cell separating plate having high temperature and acid resistance, and a method of manufacturing the same.

### Description of the Related Art

Fuel cells are cells assembled so as to electrochemically generate oxidation of fuel, for example, hydrogen, phosphoric acid, methanol, etc. and thus directly convert free energy change accompanied by the oxidation into electric energy. Fuel cells are classified into solid oxide fuel cells (SOFC), phosphoric acid fuel cells (PAFC), proton exchange membrane fuel cells (PEMFC), direct methanol fuel cells (DMFC), etc., depending upon the types of fuels and reactive catalysts.

A separating plate for separating electrolyte, an anode, and a cathode from each other, as one of stack components of fuel cells requires properties such as electrical conductivity, gas permeability, strength, corrosion resistance, and elution inhibition effects. As materials of such a separating plate, metal, graphite, or the like is used. While metal separating plates have a drawback such as corrosivity, graphite separating plates have drawbacks such as high manufacturing costs and large volume. Accordingly, a separating plate is molded through compression-molding and injection-molding after mixing a thermosetting resin or a thermoplastic resin with a graphite powder.

In particular, when a fuel cell separating plate for high temperature is manufactured, a phenolic resin, epoxy resin, or the like is used as a thermosetting resin, and super engineering plastic stable at 150°C or more is used as a thermoplastic resin.

In regard to a method of manufacturing a high temperature and acid-resistant fuel cell separating plate, US Patent Laid-Open Publication No. 2010-0307681 discloses a method of manufacturing a three-layer separating plate wherein a flat plate is inserted between two plates in which flow channels are formed. However, in regard to manufacturing such a plate, three or more molding processes are required and thus it takes a long time to manufacture the same. In addition, since three or more molds are required, a manufacturing process thereof is very complex.

### [Related Documents]

### [Patent Document]

(Patent Document 1) US Patent Laid-Open Publication No. 2010-0307681

### SUMMARY OF THE INVENTION

Therefore, the present invention has been made in view of the above problems, and it is an object of the present invention to provide a fuel cell separating plate and a method of manufacturing the same wherein a manufacturing process of the fuel cell separating plate is simple and effective while decreasing a use amount of a conductive material such as graphite, without reduction of conductivity of a separating. The invention is defined in the claims.

In accordance with an aspect of the present invention, the above and other objects can be accomplished by the provision of a fuel cell separating plate including a molded product manufactured from a mixture of expanded graphite and thermoplastic resin. Here, the thermoplastic resin may be a fluorocarbon polymer, and the fluorocarbon polymer may be fluorinated ethylene propylene (FEP), polytetrafluoroethylene (PTFE), perfluoroalkoxy (PFA), or a combination thereof.

The molded product may include 60 to 90 wt% of the expanded graphite and 10 to 40 wt% of the fluorocarbon polymer, particularly 60 to 70 wt% of the expanded graphite and 30 to 40 wt% of the fluorocarbon polymer.

In addition, the molded product according to an embodiment of the present invention may include a layer containing a small amount of graphite, including the expanded graphite and the thermoplastic resin, and a layer containing a high amount of graphite, including the thermoplastic resin in a smaller amount than the layer containing a small amount of graphite and disposed on two opposite sides of the layer containing a small amount of graphite.

Here, the layer containing a small amount of graphite may include 60 to 90 wt% of the expanded graphite and 10 to 40 wt% of the fluorocarbon polymer, and the layer containing a high amount of graphite may include 91 to 95 wt% of the expanded graphite and 5 to 9 wt% of the fluorocarbon polymer.

In addition, the layer containing a small amount of graphite may include 60 to 90 wt% of the expanded graphite and 10 to 40 wt% of the fluorocarbon polymer, and the layer containing a high amount of graphite may include 85 to 92 wt% of natural graphite flakes and 8 to 15 wt% of the fluorocarbon polymer.

According to an embodiment of the present invention, the layer containing a high amount of graphite may have a porosity of 0.1 to 10 cc/min or more.

In accordance with another aspect of the present invention, there is provided a method of manufacturing a fuel cell separating plate, the method including mixing expanded graphite and thermoplastic resin, and molding a mixture of the expanded graphite and the thermoplastic resin. Here, the molding may include compression-molding the mixture at 280 to 360°C for 1 to 20 minutes.

In addition, the mixing may include extrusion-molding the expanded graphite and the fluorocarbon polymer, and the molding may include injection-molding the mixture at 280 to 360°C for 1 to 20 minutes.

In addition, the molding may include extruding the mixture to prepare a sheet, and compression-molding the sheet at 280 to 360°C for 1 to 20 minutes.

In an embodiment of the present invention, the mixing may include preparing a first carbon composite by mixing 60 to 90 wt% of the expanded graphite and 10 to 40 wt% of the fluorocarbon polymer, and preparing a second carbon composite by mixing 91 to 95 wt% of the expanded graphite and 5 to 9 wt% of the fluorocarbon polymer; and the molding may include preparing a multilayer sheet by rolling the first carbon composite and the second carbon composite such that a layer containing a small amount of graphite, composed of the first carbon composite is disposed between two layers containing a high amount of graphite, composed of the second carbon composite, and compression-molding the multilayer sheet at 280 to 360°C for 1 to 20 minutes.

In another embodiment of the present invention, the mixing may include preparing a first carbon composite including 60 to 90 wt% of the expanded graphite and 10 to 40 wt% of the fluorocarbon polymer, and preparing a second carbon composite including 85 to 92 wt% of natural graphite flakes and 8 to 15 wt% of the fluorocarbon polymer; and the molding may include preparing a multilayer sheet by rolling the first carbon composite and the second carbon composite such that a layer containing a small amount of graphite, composed of the first carbon composite is disposed between two layers containing a high amount of graphite, composed of the second carbon composite, and compression-molding the multilayer sheet at 280 to 360°C for 1 to 20 minutes.

In addition, the method of manufacturing a fuel cell separating plate according to the present invention may further include, after the molding, removing the thermoplastic resin distributed on a surface of the molded separating plate. Here, the removing may include removing the thermoplastic resin through blasting.

### [Advantageous Effects]

When the fuel cell separating plate and the method of manufacturing the same according to the present invention are used, a use amount of a conductive material is decreased and conductivity of the separating plate is not decreased.

When the fuel cell separating plate and the method of manufacturing the same according to the present invention are used, a manufacturing process is simplified and manufacturing time is shortened.

When the fuel cell separating plate and the method of manufacturing the same according to the present invention are used, high electrical conductivity and air tightness are exhibited.

In addition, when the fuel cell separating plate and the method of manufacturing the same according to the present invention are used, superior injection-moldability is exhibited and thickness variation of a separating plate during compression-molding is small.

### BRIEF DESCRIPTION OF THE DRAWINGS

The above and other objects, features and other advantages of the present invention will be more clearly understood from the following detailed description taken in conjunction with the accompanying drawings, in which:

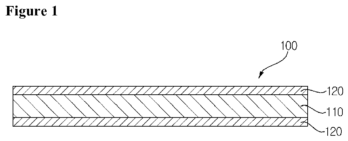

FIG. 1 is a view schematically illustrating a fuel cell separating plate according to a second embodiment of the present invention.

### DETAILED DESCRIPTION OF THE INVENTION

Hereinafter, the present invention will be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art.

Terms used in the specification are used to describe specific embodiments and it should not be understood as limiting the present invention. An expression used in the singular encompasses the expression of the plural, unless it has a clearly different meaning in the context. Also, it is to be understood that terms such as "comprise" and/or "have" are intended to indicate the existence of the features, numbers, steps, actions, components, parts, or combinations thereof, and are not intended to preclude the possibility that one or more other features, numbers, steps, actions, components, parts, or combinations thereof may exist or may be added.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, a fuel cell separating plate according to an embodiment of the present invention is described in detail. A fuel cell separating plate according to a first embodiment of the present invention includes a molded product formed from a mixture of expanded graphite and thermoplastic resin. As the thermoplastic resin, polyacrylate, polysulfone, polyethersulfone, polyphenylenesulfide, polyetherether ketone, polyimide, polyetherimide, a fluorocarbon polymer, a liquid crystal polymer, or the like, which is stable at high temperature, may be used.

Thereamong, the fluorocarbon polymer such as polyvinyldene fluoride, polytetrafluoroethylene (PTFE), perfluoroalkoxy (PFA), or fluorinated ethylene propylene is preferred. In addition, as polymers applied to PAFC that operates under a condition of 200°C and a phosphoric acid concentration of 90% or more, FEP, PTFE, PFA or a combination thereof having excellent acid resistance is more preferable.

In addition, in an embodiment, the molded product of the fuel cell separating plate may include 60 to 90 wt% of the expanded graphite and 10 to 40 wt% of the fluorocarbon polymer. Since the expanded graphite has high conductivity, compared to general natural graphite, conductivity of the separating plate is not decreased due to use of the expanded graphite even when graphite is added in a small amount. In addition, a high temperature- and acid-resistant fuel cell separating plate, from which gas is not leaked, may be manufactured.

Accordingly, the high temperature- and acid-resistant fuel cell separating plate according to the embodiment of the present invention may be used in fuel cells such as DMFC, PEMFC, and PAFC.

In addition, in the molded product of the fuel cell separating plate according to the embodiment of the present invention, the content of the fluorocarbon polymer may be increased to 30 to 40 wt% so as to facilitate injection-molding.

In addition, in the embodiment, the molded product may be manufactured by compressing, injecting, or extruding the mixture of the expanded graphite and the thermoplastic resin. A method of manufacturing this molded product is described in detail in examples of the following method of manufacturing the fuel cell separating plate.

Referring to FIG. 1, a fuel cell separating plate according to a second embodiment of the present invention is described in detail below. Since configurations except those described below are the same as those for the fuel cell separating plate according to the first embodiment, descriptions thereof are omitted.

A molded product of a fuel cell separating plate 100 according to a second embodiment of the present invention includes a layer containing a small amount of graphite 110, which includes the expanded graphite and the thermoplastic resin, and layers containing a high amount of graphite 120, which include the graphite in a higher content and the thermoplastic resin in a smaller content than in the layer containing a small amount of graphite 110, are disposed on two opposite side of the layer containing a small amount of graphite 110. Here, the layers containing a high amount of graphite 120 may be formed in order to have a porosity of 0.1 to 10 cc/min or more.

Here, the layer containing a small amount of graphite 110 may include 60 to 90 wt% of the expanded graphite and 10 to 40 wt% of the fluorocarbon polymer. The layers containing a high amount of graphite 120 may include 91 to 95 wt% of the expanded graphite and 5 to 9 wt% of the fluorocarbon polymer.

In another embodiment, the layers containing a high amount of graphite 120 may include 85 to 92 wt% of natural graphite flakes and 8 to 15 wt% of the fluorocarbon polymer. Here, fluorocarbon polymer may be FEP, PTFE, PFA or a combination thereof.

The molded product according to the present invention may be manufactured by rolling or compressing the mixture of the expanded graphite or the natural graphite flakes and the thermoplastic resin mixture. A method of manufacturing this molded product is described in detail when a method of manufacturing the fuel cell separating plate is described below.

In the embodiment, the fuel cell separating plate 100 is configured to have a structure in which the layers containing a high amount of graphite 120 are disposed on surfaces of the layer containing a small amount of graphite and a relatively high amount of the thermoplastic resin 110. The layers containing a high amount of graphite 120 are provided to increase electrical conductivity and the layer containing a small amount of graphite 110 is provided to increase gas sealability. In addition, when surfaces of the fuel cell separating plate 100 including the layers containing a high amount of graphite 120 are manufactured to become porous, a reactive area inside the fuel cell is enlarged, thus increasing battery efficiency.

Hereinafter, a method of manufacturing the fuel cell separating plate according to an embodiment of the present invention is described in detail. A method of manufacturing the fuel cell separating plate according to the first embodiment of the present invention includes a step of mixing the expanded graphite and the thermoplastic resin, and a step of molding a mixture of the expanded graphite and the thermoplastic resin.

As described above, as the thermoplastic resin, a fluorocarbon polymer is preferred. More preferably, FEP, PFA, or PTFE as a fluorocarbon polymer, or a combination thereof is used.

Here, in the mixture of the expanded graphite and the thermoplastic resin, the expanded graphite may be included in an amount of 60 to 90 wt% and the fluorocarbon polymer may be included in an amount of 10 to 40 wt%.

The molding step may be carried out, for example, by compression-molding the mixture having the composition at 280 to 360°C for 1 to 20 minutes.

In another embodiment, in the molding step, a molded product may be manufactured by extrusion-molding the expanded graphite and the fluorocarbon polymer and injection-molding a resultant extruded mixture at 280 to 360°C for 1 to 20 minutes. Here, the content of the fluorocarbon polymer is increased to 30 to 40 wt% to facilitate injection-molding.

In yet another embodiment, the molding step may be carried out by manufacturing a sheet through extrusion of the mixture of the expanded graphite and the thermoplastic resin and compression-molding the manufactured sheet at 280 to 360°C for 1 to 20 minutes. In another embodiment, molding time is shortened to one to three minutes by feeding the sheet, which is pre-heated to 280 to 360°C, manufactured by extruding the mixture to a compression-molding device, and thus a separating plate may be very quickly manufactured.

After the molding, a thermoplastic resin layer such as a fluorocarbon polymer may be excessively distributed on a surface of the molded separating plate, due to pressure applied during molding. Such a thermoplastic resin layer may decrease electrical conductivity of the separating plate. Accordingly, a process of removing the thermoplastic resin layer may be additionally carried out in order to enhance electrical conductivity. In an embodiment, the thermoplastic resin on the surface may be removed through blasting.

Hereinafter, a method of manufacturing a fuel cell separating plate according to a second embodiment of the present invention is described in detail. Other configurations except those described below are the same those described in the method of manufacturing the fuel cell separating plate according to the first embodiment, and thus, descriptions therefor are omitted.

In the manufacturing method according to the second embodiment, a first carbon composite including 60 to 90 wt% of the expanded graphite and 10 to 40 wt% of the fluorocarbon polymer, and a second carbon composite including 91 to 95 wt% of the expanded graphite and 5 to 9 wt% of the fluorocarbon polymer are prepared. Subsequently, the prepared carbon composites are rolled together to manufacture a three-layer multilayer sheet in which a layer containing a small amount of graphite, composed of the first carbon composite locates between layers containing a high amount of graphite, composed of the second carbon composite. Here, the fluorocarbon polymer may be particularly FEP, PTFE, PFA, or a combination thereof.

In another embodiment, the layer containing a high amount of graphite may be prepared using a carbon composite including 85 to 92 wt% of the natural graphite flakes and 8 to 15 wt% of the fluorocarbon polymer. Here, the fluorocarbon polymer may be particularly FEP, PTFE, PFA, or a combination thereof.

Subsequently, the multilayer sheet is compression-molded at 280 to 360°C for 1 to 20 minutes to manufacture a molded product. In another embodiment, the multilayer sheet pre-heated at 280 to 360°C is fed into a compression-molding machine and molding time is shortened to 1 to 3 minutes. Accordingly, a separating plate may be very rapidly manufactured. A fuel cell separating plate manufactured according to the embodiment has a three layer structure and may be manufactured by compression-molding once through sheet manufacturing.

In addition, as in the first embodiment described above, an excessive thermoplastic resin layer formed on a surface after the compression-molding may be removed through blasting.

Hereinafter, experimental examples are described in detail to confirm effects of the fuel cell separating plate according to the present invention. Experimental examples described below are provided to exemplify the present invention and the present invention is not limited to conditions of the experimental example below.

### Experimental Example 1

Molded products for fuel cell separating plates were manufactured using expanded graphite and FEP resin, and conductivity, flexural strength, and gas sealability according to composition change of the expanded graphite and the FEP resin were confirmed. Results are summarized in Table 1 below.

**[Table 1]**

| | Composition ratio (wt%) of expanded graphite:FEP resin | | | | | | |
|---|---|---|---|---|---|---|---|
| | 60:40 | 65:35 | 70:30 | 75:25 | 80:20 | 85:15 | 90:10 |
| Conductivity (S/cm) In-plane | 88 | 97 | 105 | 111 | 117 | 122 | 129 |
| flexural strength (MPa) | 58 | 54 | 52 | 52 | 48 | 46 | 40 |
| Gas sealability (cc/min) | No leak | No leak | No leak | No leak | No leak | No leak | No leak |

As shown in Table 1, with decreasing FEP content, conductivity is enhanced and flexural strength is decreased. However, the flexural strength is maintained such that the molded products may be used as high temperature and corrosion resistant fuel cell separating plates. In particular, it can be confirmed that gas sealability is maintained due to characteristics of combinations of the expanded graphite and the FEP resin even when the content of the FEP resin is about 10 w%.

It can be confirmed that, even when the amount of the expanded graphite in the carbon composite is about 60 wt%, among compositions of Table 1, electrical conductivity sufficiently applicable to a fuel cell is exhibited. Accordingly, it can be confirmed that, in the case of a highly conductive fuel cell separating plate, the amount of the conductive material may be properly maintained and thus the separating plate may be more easily molded.

In particular, so as to secure fluidity of a material during injection-molding, a large amount of resin having satisfactory fluidity is required. However, conventional methods have difficulties in that injectability should be secured while increasing the amount of conductive filler. In the case of the carbon composite prepared according to the experimental example, the FEP resin may be added in an amount of up to 30 to 40%, and thus, it is judged injection-molding to be very advantageously used upon manufacturing of the fuel cell separating plate according to the present invention.

In addition, the carbon composite prepared according to the present invention has high fluidity, and thus, thickness variation in a separating plate is decreased during compression-molding.

Conductivity, flexural strength, and air tightness of carbon composite compositions summarized in Table 1 may be secured, and thus, a fuel cell separating plate may be manufactured through a simple process of compression-molding at 280 to 360°C for 1 to 20 minutes.

### Experimental Example 2

Carbon composites for porous separating plates were prepared, and conductivity, flexural strength and gas sealability thereof were measured. Table 2 shows results for experimental examples in which the content of the expanded graphite in each of mixtures of the FEP resin and the expanded graphite was 91 to 95%. Table 3 shows results for experimental examples in which each of the carbon composites includes the natural graphite flakes in an amount of 85 to 92%.

**[Table 2]**

| | Composition ratio (wt%) of expanded graphite:FEP resin | | |
|---|---|---|---|
| | 91:9 | 93:7 | 95:5 |
| Conductivity (S/cm) In-plane | 128 | 134 | 145 |
| Flexural strength (MPa) | 38 | 35 | 33 |
| Gas sealability (cc/min) | 0.1 to 1 | 1 to 10 | 10 < |

**[Table 3]**

| | Composition ratio (wt%) of natural graphite flake:FEP resin | |
|---|---|---|
| | 85:15 | 92:8 |
| Conductivity (S/cm) In-plane | 102 | 114 |
| Flexural strength (MPa) | 45 | 38 |
| Gas sealability (cc/min) | 0.1 to 1 | 1 to 10 |

It is confirmed that a fuel cell separating plate having a porosity of 0.1 to 10 cc/min or more may be manufactured by molding the carbon composite. A carbon composite prepared as described above may be applied to the layer containing a high amount of graphite of the fuel cell separating plate illustrated in FIG. 1.

Although the preferred embodiments of the present invention have been disclosed for illustrative purposes, those skilled in the art will appreciate that various modifications, additions and substitutions are possible, without departing from the scope of the invention as disclosed in the accompanying claims.

### [Description of Symbols]

100: MOLDED PRODUCT OF FUEL CELL SEPARATING PLATE
110: LAYER CONTAINING SMALL AMOUNT OF GRAPHITE
120: LAYER CONTAINING HIGH AMOUNT OF GRAPHITE

## Claims

1. A method of manufacturing a fuel cell separating plate, the method comprising:
mixing expanded graphite and thermoplastic resin;
molding a mixture of the expanded graphite and the thermoplastic resin;
enhancing electrical conductivity of the fuel cell separating plate by removing the thermoplastic resin distributed on a surface of the molded separating plate through blasting.

2. The method according to claim 1, wherein the thermoplastic resin is a fluorocarbon polymer.

3. The method according to claim 2, wherein the fluorocarbon polymer is any one of FEP, PTFE, and PFA.

4. The method according to claim 3, wherein the mixture comprises 60 to 90 wt% of the expanded graphite and 10 to 40 wt% of the fluorocarbon polymer.

5. The method according to claim 4, wherein the molding comprises compression-molding the mixture at 280 to 360°C for 1 to 20 minutes.

6. The method according to claim 4, wherein the mixing comprises extrusion-molding the expanded graphite and the fluorocarbon polymer, and
the molding comprises injection-molding the mixture at 280 to 360°C for 1 to 20 minutes.

7. The method according to claim 6, wherein the mixture comprises 60 to 70 wt% of the expanded graphite and 30 to 40 wt% of the fluorocarbon polymer.

8. The method according to claim 4, wherein the molding comprises:
extruding the mixture to prepare a sheet, and
compression-molding the sheet at 280 to 360°C for 1 to 20 minutes.

9. The method according to claim 3, wherein the mixing comprises preparing a first carbon composite by mixing 60 to 90 wt% of the expanded graphite and 10 to 40 wt% of the fluorocarbon polymer, and preparing a second carbon composite by mixing 91 to 95 wt% of the expanded graphite and 5 to 9 wt% of the fluorocarbon polymer, and
the molding comprises preparing a multilayer sheet by rolling the first carbon composite and the second carbon composite such that a layer containing a small amount of graphite, composed of the first carbon composite is disposed between two layers containing a high amount of graphite, composed of the second carbon composite, and compression-molding the multilayer sheet at 280 to 360°C for 1 to 20 minutes.

10. The method according to claim 3, wherein the mixing comprises preparing a first carbon composite comprising 60 to 90 wt% of the expanded graphite and 10 to 40 wt% of the fluorocarbon polymer, and preparing a second carbon composite comprising 85 to 92 wt% of natural graphite flakes and 8 to 15 wt% of the fluorocarbon polymer, and
the molding comprises preparing a multilayer sheet by rolling the first carbon composite and the second carbon composite such that a layer containing a small amount of graphite, composed of the first carbon composite is disposed between two layers containing a high amount of graphite, composed of the second carbon composite, and compression-molding the multilayer sheet at 280 to 360°C for 1 to 20 minutes.

11. A fuel cell separating plate manufactured by a method according to any one of the preceding claims 1 to 10, comprising a molded product manufactured from a mixture of expanded graphite and thermoplastic resin.

12. The fuel cell separating plate according to claim 11, wherein the thermoplastic resin is a fluorocarbon polymer.

13. The fuel cell separating plate according to claim 12, wherein the fluorocarbon polymer is fluorinated ethylene propylene (FEP), polytetrafluoroethylene (PTFE), perfluoroalkoxy (PFA), or a combination thereof.

14. The fuel cell separating plate according to claim 13, wherein the molded product comprises 60 to 90 wt% of the expanded graphite and 10 to 40 wt% of the fluorocarbon polymer.

15. The fuel cell separating plate according to claim 14, wherein the molded product comprises 60 to 70 wt% of the expanded graphite and 30 to 40 wt% of the fluorocarbon polymer.

16. The fuel cell separating plate according to any one of claims 11 to 15, wherein the molded product is manufactured by compression-molding, injection-molding, extrusion-molding, or a combination of two or more thereof.

17. The fuel cell separating plate according to claim 11, wherein the molded product comprises:
a layer containing a small amount of graphite, comprising the expanded graphite and the thermoplastic resin, wherein the layer containing a small amount of graphite comprises 60 to 90 wt% of the expanded graphite and 10 to 40 wt% of the fluorocarbon polymer, and
a layer containing a high amount of graphite, comprising the thermoplastic resin in a smaller amount than the layer containing a small amount of graphite and disposed on two opposite sides of the layer containing a small amount of graphite, wherein the layer containing a high amount of graphite comprises 91 to 95 wt% of the expanded graphite and 5 to 9 wt% of the fluorocarbon polymer.

18. The fuel cell separating plate according to claim 11, wherein the molded product comprises:
a layer containing a small amount of graphite, comprising the expanded graphite and the thermoplastic resin, wherein the layer containing a small amount of graphite comprises 60 to 90 wt% of the expanded graphite and 10 to 40 wt% of the fluorocarbon polymer, and
a layer containing a high amount of graphite, comprising the thermoplastic resin in a smaller amount than the layer containing a small amount of graphite and disposed on two opposite sides of the layer containing a small amount of graphite, wherein the layer containing a high amount of graphite comprises 85 to 92 wt% of natural graphite flakes and 8 to 15 wt% of the fluorocarbon polymer

19. The fuel cell separating plate according to any one of claims 17 or 18, wherein the layer containing a high amount of graphite has a porosity of 0.1 to 10 cc/min or more.

## Patentansprüche

1. Verfahren zur Herstellung einer Brennstoffzellen-Bipolarplatte bzw. -Trennplatte, wobei das Verfahren umfasst:
Vermischen von expandiertem Graphit bzw. Blähgraphit und thermoplastischen Harz;
Formen einer Mischung aus dem expandierten Graphit und dem thermoplastischen Harz;
Steigern der elektrischen Leitfähigkeit der Brennstoffzellen-Bipolarplatte durch Entfernen des auf einer Oberfläche der geformten Bipolarplatte verteilten thermoplastischen Harzes mittels Strahlen.

2. Das Verfahren gemäß Anspruch 1, wobei das thermoplastische Harz ein Fluorcarbonpolymer ist.

3. Das Verfahren gemäß Anspruch 2, wobei das Fluorcarbonpolymer irgendeines ist, ausgewählt aus FEP, PTFE und PFA.

4. Das Verfahren gemäß Anspruch 3, wobei die Mischung 60 bis 90 Gew.-% des expandierten Graphits und 10 bis 40 Gew.-% des Fluorcarbonpolymers umfasst.

5. Das Verfahren gemäß Anspruch 4, wobei das Formen ein Formpressen der Mischung bei 280 bis 360 °C für 1 bis 20 Minuten umfasst.

6. Das Verfahren gemäß Anspruch 4, wobei das Vermischen ein Strangpressen des expandierten Graphits und des Fluorcarbonpolymers umfasst, und
das Formen ein Spritzgießen der Mischung bei 280 bis 360 °C für 1 bis 20 Minuten umfasst.

7. Das Verfahren gemäß Anspruch 6, wobei die Mischung 60 bis 70 Gew.-% des expandierten Graphits und 30 bis 40 Gew.-% des Fluorcarbonpolymers umfasst.

8. Das Verfahren gemäß Anspruch 4, wobei das Formen das Folgende umfasst:
Extrudieren der Mischung zur Herstellung einer Folie bzw. einer Platte;
Formpressen der Folie bzw. der Platte bei 280 bis 360 °C für 1 bis 20 Minuten.

9. Das Verfahren gemäß Anspruch 3, wobei das Vermischen das Herstellen eines ersten Carbon-Komposites bzw. Carbon-Verbundwerkstoffes durch Vermischen von 60 bis 90 Gew.-% des expandierten Graphits und 10 bis 40 Gew.-% des Fluorcarbonpolymers und das Herstellen eines zweiten Carbon-Komposites bzw. Carbon-Verbundwerkstoffes durch Vermischen von 91 bis 95 Gew.-% des expandierten Graphits und 5 bis 9 Gew.-% des Fluorcarbonpolymers umfasst und
das Formen das Herstellen einer mehrlagigen Folie bzw. Platte durch das Walzen des ersten Carbon-Komposites und des zweiten Carbon-Komposites in einer Art und Weise, dass eine Lage mit einer kleinen Menge an Graphit, bestehend aus dem ersten Carbon-Komposite, zwischen zwei Lagen mit einer hohen Menge an Graphit, bestehend aus dem zweiten Carbon-Komposite, angeordnet ist, und ein Formpressen der mehrlagigen Folie bzw. Platte bei 280 bis 360 °C für 1 bis 20 Minuten umfasst.

10. Das Verfahren gemäß Anspruch 3, wobei das Vermischen das Herstellen eines ersten Carbon-Komposites bzw. Carbon-Verbundwerkstoffes durch Vermischen von 60 bis 90 Gew.-% des expandierten Graphits und 10 bis 40 Gew.-% des Fluorcarbonpolymers und das Herstellen eines zweiten Carbon-Komposites bzw. Carbon-Verbundwerkstoffes durch Vermischen von 85 bis 92 Gew.-% an Naturgraphitflocken und 8 bis 15 Gew.-% des Fluorcarbonpolymers umfasst und
das Formen das Herstellen einer mehrlagigen Folie bzw. Platte durch das Walzen des ersten Carbon-Komposites und des zweiten Carbon-Komposites in einer Art und Weise, dass eine Lage mit einer kleinen Menge an Graphit, bestehend aus dem ersten Carbon-Komposite, zwischen zwei Lagen mit einer hohen Menge an Graphit, bestehend aus dem zweiten Carbon-Komposite, angeordnet ist, und ein Formpressen der mehrlagigen Folie bzw. Platte bei 280 bis 360 °C für 1 bis 20 Minuten umfasst.

11. Eine Brennstoffzellen-Bipolarplatte, hergestellt durch ein Verfahren gemäß irgendeinem der vorangehenden Ansprüche 1 bis 10, umfassend ein geformtes Produkt, hergestellt aus einer Mischung eines expandierten Graphits und eines thermoplastischen Harzes.

12. Die Brennstoffzellen-Bipolarplatte gemäß Anspruch 11, wobei das thermoplastische Harz ein Fluorcarbonpolymer ist.

13. Die Brennstoffzellen-Bipolarplatte gemäß Anspruch 12, wobei das Fluorcarbonpolymer fluoriertes Ethylenpropylen (FEP), Polytetrafluorethylen (PTFE), Perfluoralkoxy (PFA) oder eine Kombination daraus ist.

14. Die Brennstoffzellen-Bipolarplatte gemäß Anspruch 13, wobei das geformte Produkt 60 bis 90 Gew.-% des expandierten Graphits und 10 bis 40 Gew.-% des Fluorcarbonpolymers umfasst.

15. Die Brennstoffzellen-Bipolarplatte gemäß Anspruch 14, wobei das geformte Produkt 60 bis 70 Gew.-% des expandierten Graphits und 30 bis 40 Gew.-% des Fluorcarbonpolymers umfasst.

16. Die Brennstoffzellen-Bipolarplatte gemäß irgendeinem der Ansprüche 11 bis 15, wobei das geformte Produkt mittels Formpressen, Spritzgießen, Strangpressen oder einer Kombination aus zwei oder mehreren dieser Verfahren hergestellt ist.

17. Die Brennstoffzellen-Bipolarplatte gemäß Anspruch 11, wobei das geformte Produkt umfasst:
eine Lage mit einer kleinen Menge an Graphit, umfassend den expandierten Graphit und das thermoplastische Harz, wobei die Lage mit einer kleinen Menge an Graphit 60 bis 90 Gew.-% des expandierten Graphites und 10 bis 40 Gew.-% des Fluorcarbonpolymers umfasst, und
eine Lage mit einer hohen Menge an Graphit, umfassend das thermoplastische Harz in einer kleineren Menge als die Lage mit einer kleinen Menge an Graphit und angeordnet auf zwei gegenüberliegenden Seiten der Lage mit einer kleinen Menge an Graphit, wobei die Lage mit einer hohen Menge an Graphit 91 bis 95 Gew.-% des expandierten Graphits und 5 bis 9 Gew.-% des Fluorcarbonpolymers umfasst.

18. Die Brennstoffzellen-Bipolarplatte gemäß Anspruch 11, wobei das geformte Produkt umfasst:
eine Lage mit einer kleinen Menge an Graphit, umfassend den expandierten Graphit und das thermoplastische Harz, wobei die Lage mit einer kleinen Menge an Graphit 60 bis 90 Gew.-% des expandierten Graphites und 10 bis 40 Gew.-% des Fluorcarbonpolymers umfasst, und
eine Lage mit einer hohen Menge an Graphit, umfassend das thermoplastische Harz in einer kleineren Menge als die Lage mit einer kleinen Menge an Graphit und angeordnet auf zwei gegenüberliegenden Seiten der Lage mit einer kleinen Menge an Graphit, wobei die Lage mit einer hohen Menge an Graphit 85 bis 92 Gew.-% an Naturgraphitflocken und 8 bis 15 Gew.-% des Fluorcarbonpolymers umfasst.

19. Die Brennstoffzellen-Bipolarplatte gemäß einem der Ansprüche 17 oder 18, wobei die Lage mit einer hohen Menge an Graphit eine Porosität von 0,1 bis 10 cm³/min oder höher aufweist.

## Revendications

1. Méthode de fabrication d'une plaque de séparation de pile à combustible, la méthode comprenant les étapes consistant à :
mélanger du graphite expansé et de la résine thermoplastique ;
mouler un mélange du graphite expansé et de la résine thermoplastique ;
améliorer la conductivité électrique de la plaque de séparation de pile à combustible en enlevant par projection de particules la résine thermoplastique distribuée sur une surface de la plaque de séparation moulée.

2. Méthode selon la revendication 1, dans laquelle la résine thermoplastique est un polymère fluorocarboné.

3. Méthode selon la revendication 2, dans laquelle le polymère fluorocarboné est un quelconque parmi FEP, PTFE et PFA.

4. Méthode selon la revendication 3, dans laquelle le mélange comprend 60 à 90 % en poids de graphite expansé et 10 à 40 % en poids du polymère fluorocarboné.

5. Méthode selon la revendication 4, dans laquelle le moulage comprend un moulage par compression du mélange entre 280 et 360°C pendant 1 à 20 minutes.

6. Méthode selon la revendication 4, dans laquelle le mélange comprend un moulage par extrusion du graphite expansé et du polymère fluorocarboné, et
le moulage comprend un moulage par injection du mélange entre 280 et 360°C pendant 1 à 20 minutes.

7. Méthode selon la revendication 6, dans laquelle le mélange comprend 60 à 70 % en poids de graphite expansé et 30 à 40 % en poids du polymère fluorocarboné.

8. Méthode selon la revendication 4, dans laquelle le moulage comprend les étapes consistant à :
extruder le mélange pour préparer une feuille, et
mouler par compression la feuille entre 280 et 360°C pendant 1 à 20 minutes.

9. Méthode selon la revendication 3, dans laquelle le mélange comprend la préparation d'un premier composite de carbone en mélangeant 60 à 90 % en poids du graphite expansé et 10 à 40 % en poids du polymère fluorocarboné, et la préparation d'un second composite de carbone en mélangeant 91 à 95 % en poids du graphite expansé et 5 à 9% en poids du polymère fluorocarboné, et
le moulage comprend la préparation d'une feuille multicouche en roulant le premier composite de carbone et le second composite de carbone de telle sorte qu'une couche contenant une petite quantité de graphite, composé du premier composite de carbone, est disposée entre deux couches contenant une grande quantité de graphite, composé du second composite de carbone, et le moulage par compression de la feuille multicouche entre 280 et 360°C pendant 1 à 20 minutes.

10. Méthode selon la revendication 3, dans laquelle le mélange comprend la préparation d'un premier composite de carbone comprenant 60 à 90 % en poids du graphite expansé et 10 à 40 % en poids du polymère fluorocarboné, et la préparation d'un second composite de carbone comprenant 85 à 92 % en poids de flocons de graphite naturel et 8 à 15 % en poids du polymère fluorocarboné, et
le moulage comprend la préparation d'une feuille multicouche en roulant le premier composite de carbone et le second composite de carbone de sorte qu'une couche contenant une petite quantité de graphite, composé du premier composite de carbone, est disposée entre deux couches contenant une grande quantité de graphite, composé du second composite de carbone, et le moulage par compression de la feuille multicouche entre 280 et 360°C pendant 1 à 20 minutes.

11. Plaque de séparation de pile à combustible fabriquée par une méthode selon l'une quelconque des revendications 1 à 10, comprenant un produit moulé fabriqué à partir d'un mélange de graphite expansé et de résine thermoplastique.

12. Plaque de séparation de pile à combustible selon la revendication 11, dans laquelle la résine thermoplastique est un polymère fluorocarboné.

13. Plaque de séparation de pile à combustible selon la revendication 12, dans laquelle le polymère fluorocarboné est l'éthylène propylène fluoré (FEP), le polytétrafluoroéthylène (PTFE), le perfluoroalcoxy (PFA) ou une combinaison de ceux-ci.

14. Plaque de séparation de pile à combustible selon la revendication 13, dans laquelle le produit moulé comprend 60 à 90 % en poids du graphite expansé et 10 à 40 % en poids du polymère fluorocarboné.

15. Plaque de séparation de pile à combustible selon la revendication 14, dans laquelle le produit moulé comprend 60 à 70 % en poids de graphite expansé et 30 à 40 % en poids du polymère fluorocarboné.

16. Plaque de séparation de pile à combustible selon l'une quelconque des revendications 11 à 15, dans laquelle le produit moulé est fabriqué par moulage par compression, moulage par injection, moulage par extrusion, ou une combinaison de deux de ceux-ci ou plus.

17. Plaque de séparation de pile à combustible selon la revendication 11, dans laquelle le produit moulé comprend :
une couche contenant une petite quantité de graphite, comprenant le graphite expansé et la résine thermoplastique, dans laquelle la couche contenant une petite quantité de graphite comprend 60 à 90 % en poids du graphite expansé et 10 à 40 % en poids du polymère fluorocarboné, et
une couche contenant une quantité élevée de graphite, comprenant la résine thermoplastique en une quantité inférieure à la couche contenant une petite quantité de graphite et disposée sur deux côtés opposés de la couche contenant une petite quantité de graphite, dans laquelle la couche contenant une quantité élevée de graphite comprend 91 à 95 % en poids du graphite expansé et 5 à 9 % en poids du polymère fluorocarboné.

18. Plaque de séparation de pile à combustible selon la revendication 11, dans laquelle le produit moulé comprend :
une couche contenant une petite quantité de graphite, comprenant le graphite expansé et la résine thermoplastique, dans laquelle la couche contenant une petite quantité de graphite comprend 60 à 90 % en poids du graphite expansé et 10 à 40 % en poids du polymère fluorocarboné, et
une couche contenant une quantité élevée de graphite, comprenant la résine thermoplastique en une quantité inférieure à celle de la couche contenant une petite quantité de graphite et disposée sur deux côtés opposés de la couche contenant une petite quantité de graphite, dans laquelle la couche contenant une quantité élevée de graphite comprend 85 à 92 % en poids de flocons de graphite naturel et 8 à 15% en poids du polymère fluorocarboné.

19. Plaque de séparation de pile à combustible selon l'une quelconque des revendications 17 ou 18, dans laquelle la couche contenant une quantité élevée de graphite a une porosité de 0,1 à 10 cm3/min ou plus.
